(19) Europäisches Patentamt

European Patent Office

Office européen des brevets

(11) EP 0 985 989 B1

(12) EUROPÄISCHE PATENTSCHRIFT

(45) Veröffentlichungstag und Bekanntmachung des Hinweises auf die Patenterteilung:
22.02.2006 Patentblatt 2006/08

(51) Int Cl.:
*G05B 19/416* (2006.01)    *B25J 9/16* (2006.01)

(21) Anmeldenummer: 99117613.2

(22) Anmeldetag: 07.09.1999

(54) **Verfahren und Einrichtung zum Verbessern des dynamischen Verhaltens eines Roboters**

Method and device for improving the dynamic behaviour of a robot

Méthode et dispositif pour améliorer le comportement dynamique d'un robot

(84) Benannte Vertragsstaaten:
AT BE CH CY DE DK ES FI FR GB GR IE IT LI LU MC NL PT SE

(30) Priorität: 09.09.1998 DE 19841283

(43) Veröffentlichungstag der Anmeldung:
15.03.2000 Patentblatt 2000/11

(73) Patentinhaber: KUKA Roboter GmbH
86165 Augsburg (DE)

(72) Erfinder: Stelter, Johannes, Dipl.-Ing.
82131 Gauting (DE)

(74) Vertreter: Dipl.-Ing. Heiner Lichti
Dipl.-Phys. Dr.rer.nat. Jost Lempert
Dipl.-Ing. Hartmut Lasch
Postfach 41 07 60
76207 Karlsruhe (DE)

(56) Entgegenhaltungen:
EP-A- 0 145 991            DE-C- 3 843 165
FR-A- 2 680 886           US-A- 4 906 907
US-A- 5 459 383

• PATENT ABSTRACTS OF JAPAN vol. 009, no. 141 (P-364), 15. Juni 1985 (1985-06-15) & JP 60 020214 A (HITACHI SEISAKUSHO KK), 1. Februar 1985 (1985-02-01)
• PATENT ABSTRACTS OF JAPAN vol. 010, no. 173 (P-469), 18. Juni 1986 (1986-06-18) & JP 61 023212 A (HITACHI SEISAKUSHO KK;OTHERS: 01), 31. Januar 1986 (1986-01-31)
• MANABU MATSUOKA ET AL: "VIBRATION SUPPRESSION AND DISTURBANCE REJECTION CONTROL OF A FLEXIBLE LINK ARM" PROCEEDINGS OF THE INTERNATIONAL CONFERENCE ON INDUSTRIAL ELECTRONICS, CONTROL, AND INSTRUMENTATION (IECON), US,NEW YORK, IEEE, Bd. CONF. 21, 6. November 1995 (1995-11-06), Seiten 1260-1265, XP000559366 ISBN: 0-7803-3027-7
• MOUDGAL V G ET AL: "RULE-BASED CONTROL FOR A FLEXIBLE-LINK ROBOT" IEEE TRANSACTIONS ON CONTROL SYSTEMS TECHNOLOGY,US,IEEE INC. NEW YORK, Bd. 2, Nr. 4, 1. Dezember 1994 (1994-12-01), Seiten 392-405, XP000487108 ISSN: 1063-6536

**Beschreibung**

Die Erfindung betrifft ein Verfahren nach dem Oberbegriff des Anspruchs 1 und eine Einrichtung nach dem Oberbegriff des Anspruchs 4.

Roboter weisen laut Definition eine Anzahl mechanisch verbundener, aber unabhängig voneinander ansteuerbarer Antriebe auf. In fast allen kommerziell verfügbaren Robotersystemen wird eine Bahnplanung für den gesamten Roboter unter der Annahme vollzogen, dass der Roboter starr ist, also keinerlei Elastizitäten besitzt. Auch für eine Lageregelung der einzelnen Antriebe werden die system-immanenten Elastizitäten nicht berücksichtigt, da die Regelung ausschließlich auf antriebsseitig gemessenen Größen, wie der Position und gegebenenfalls Geschwindigkeit beruht, und eine messtechnische Erfassung der Auswirkungen dieser Elastizitäten somit nicht möglich ist.

Auch eine modellhafte Berechnung der Eigendynamik eines Antriebsstranges als Ersatz für fehlende Messgrößen ist aufgrund schwer bestimmbarer Systemparameter, wie Reibung, Temperaturabhängigkeit, Verschleiß u.ä., nur unzureichend möglich. Dieses Nichtberücksichtigen der Eigendynamik führt zu unerwünschten Erscheinungen, die sich durch ein Abweichen von der Sollposition in Schwingungen, Schleppfehler u.ä., manifestieren.

Um die heutzutage üblichen Toleranzspezifikationen von Industrierobotern zu erreichen, sind aufwändige und kostspielige konstruktive Maßnahmen, nämlich eine hohe Steifigkeit aller Bauelemente, wie Welle, Getriebe, etc. notwendig mit dem Ziel, Einflüsse der Eigendynamik der Antriebsstränge auf ein erträgliches Maß zu reduzieren. Dies führt u.a. auch dazu, dass bei heutigen Industrierobotern das Verhältnis von Eigengewicht zu spezifiziertem Lastgewicht sehr ungünstig ausfällt.

Die vorstehend angeführten Probleme ließen sich aus regelungstechnischer Sicht durch ein Hinzunehmen abtriebsseitiger Messgrößen vermeiden. Da die bei der Regelung von Antrieben bisher üblicherweise eingesetzten Positions-und/oder Geschwindigkeitsmesssysteme, wie Resolver, Hall-sensoren, Tachometer u.ä., entweder direkt oder indirekt über ein Getriebe mit dem sich drehenden Teil der Antriebseinheit verbunden sind, ergibt sich ein relativ großer konstruktiver Aufwand bei der Integration eines solchen Sensors in einen Antriebsstrang. Zudem erfordern solche Sensoren ein relativ hohes Maß an signalverarbeitenden Maßnahmen. Aus diesem Grund wird bislang bei Positioniersystemen auf ein abtriebsseitiges Messsystem zur Verbesserung der Regelgüte verzichtet.

Die FR 2 680 886 A1 zeigt ein Verfahren und eine Vorrichtung zum Bestimmen der Situation des Endorgans eines Roboters sowie eine Vorrichtung zur Durchführung dieses Verfahrens. Dazu wird der Roboter mit einem Inertial-Messsystem ausgestattet, das bei Bewegungen des Roboter-Endorgans lineare Beschleunigungen und Winkelgeschwindigkeiten des Endorgans in Bezug auf ein Inertialsystem bestimmt. Mittels derartiger Inertial-Messsysteme lässt sich nach geeigneter Integration der Messwerte eine Situationsänderung des Endorgans des Roboters und nach Abgleich mit einem festen Referenzsystem eine Situation des Endorgans (Position und Orientierung) bestimmen. Derartige Verfahren und Vorrichtungen sind im Bereich der Robotertechnik bekannt und werden vorzugsweise zum Kalibrieren von Robotern zwecks Erhöhung ihrer Positioniergenauigkeit verwendet. Hierbei werden regelmäßig vorgegebene Bewegungsbahnen des Roboters abgefahren; anschließend werden die mit dem Inertial-Messsystem bestimmten, gespeicherten Messwerte mit entsprechenden Sollwerten verglichen, wobei das Vergleichsergebnis zum Kalibrieren des Roboters, beispielsweise durch Anpassen eines steuerungsrelevanten Parametermodells des Roboters, verwendet wird.

Der Erfindung liegt die Aufgabe zugrunde, ein Verfahren und eine Einrichtung der genannten Art zu schaffen, mit den bzw. mit der eine Verbessung der Bahn- und Positioniergenauigkeit von Robotern auch unter wechselnden Anwendungsanforderungen erreichbar ist und mit dem bzw. mit der insbesondere unerwünschte Schwingvorgänge von Robotern und allgemein störende Elemente deren Eigendynamik so weit wie möglich reduziert werden können.

Erfindungsgemäß wird diese Aufgabe mit einem Verfahren nach dem Anspruch 1 sowie einer Einrichtung nach dem Anspruch 4 gelöst.

Bei dem Verfahren gemäß der Erfindung werden Beschleunigungswerte, welche mittels an geeigneten Anbringungsorten mindestens eines Antriebsstranges und/oder einer Werkzeugaufnahme abtriebsseitig angebrachten Beschleunigungssensoren gemessen werden, mittels eines Entkopplungsalgorithmus in einzelnen Robotergelenken zugeordnete Beschleunigungswerte umgerechnet. Zur Kompensation von abtriebsseitig auftretenden Schwingungen werden über eine vorzugsweise modifizierte Gelenkregelung Motore des Roboters einzeln angesteuert.

Gemäß der Erfindung wird somit durch abtriebsseitiges Messen von Beschleunigungswerten die Eigendynamik von abtriebsseitigen Baugruppen berücksichtigt, wodurch eine Verbesserung der Bahn- und Positioniergenauigkeit sowie der Positionierzeit erreicht ist, und zwar sowohl auf der Gelenkwinkelebene als auch auf der kartesischen Seite. Gerade durch verwenden von abtriebsseitig angebrachten Beschleunigungssensoren zum Messen von Beschleunigungswerten ist eine einfache, sichere und hinsichtlich der Kosten günstige Möglichkeit realisiert, um Aussagen, insbesondere über das abtriebsseitige dynamische Verhalten eines Systems zu erhalten.

Ein weiterer Vorteil der derzeit verfügbaren Beschleunigungssensoren liegt in deren leichter mechanischer Integrierbarkeit. Im Gegensatz zu anderen Sensorsystemen, wie den eingangs erwähnten Resolvern, Hall-Sensoren, u.ä., unterliegen Beschleunigungssensoren nur sehr eingeschränkten Randbedingungen bezüglich ihrer mechanischen Ankopplung an ein Robotersystem. Ferner können bedingt durch ihre komplexe Bauweise Beschleunigungssensoren praktisch an jeder Stelle eines Roboters angebracht werden.

Durch die Erfindung ist folglich unabhängig von durchzuführenden kontaktbehafteten Bearbeitungsvorgängen und somit vor allem bei berührungslosen Bearbeitungsvorgängen, bei welchen folglich keine Kontaktkräfte auftreten, eine Verbesserung des dynamischen Verhaltens eines Industrieroboters erreicht, ohne dass Kraft-/Momentensensoren verwendet werden.

Nachfolgend wird die Erfindung unter Bezugnahme auf die Zeichnungen im Einzelnen erläutert. Es zeigen:

Fig. 1 eine schematische Darstellung eines herkömmlichen Antriebsstrangs für einen Roboter;

Fig. 2 eine vereinfachte perspektivische Darstellung eines Beispiels eines Antriebsstrangs eines Roboters mit einer achsweisen Anbringung von Beschleunigungssensoren;

Fig. 3 eine der Fig. 1 entsprechende beispielhafte Darstellung eines Antriebsstrangs eines Roboters mit einer kartesischen Anbringung von mindestens einem Beschleunigungssensor;

Fig. 4 in Form eines Blockschaltbildes eine Erweiterung eines Standard-Lageregelkreises;

Fig. 5 eine Prinzipskizze einer weiteren Ausführung des erfindungsgemäßen Verfahrens;

Fig. 6a, 6b Grafiken eines prinzipiellen Verlaufs von Motorstrom und abtriebsseitiger Achsposition nach dem Stand der Technik; und

Fig. 7a, 7b Grafik eines prinzipiellen Verlaufs von Motorstrom und abtriebsseitiger Position mit einer gemäß der Erfindung angepassten Regelung.

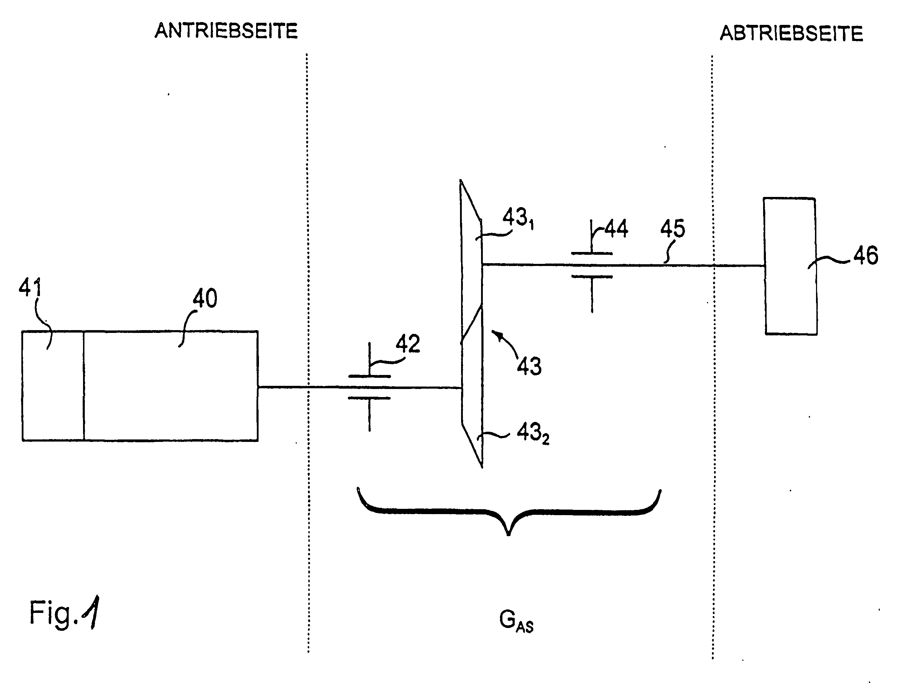

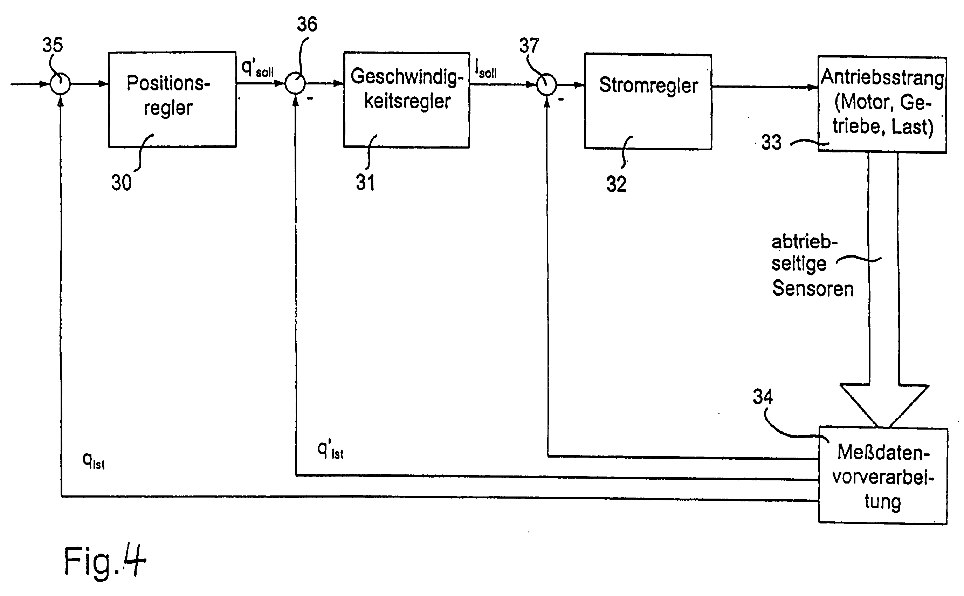

In Fig. 1 ist schematisch ein herkömmlicher Antriebsstrang eines Roboters wiedergegeben. Antriebsseitig ist ein Motor 40 vorgesehen, welchem ein Positioniersensor 41 zugeordnet ist. Mit der in einem starren Lager 42 gelagerten Antriebswelle des Motors 40 wird ein Getriebe 43 angetrieben, das in Fig. 4 durch zwei in Eingriff stehende Kegelräder $43_1$, $43_2$ angedeutet ist. Von der abtriebsseitig in einem starren Lager 44 gelagerten Welle 45 wird dann die Last 46 angetrieben. In Fig. 1 ist die Übertragungsfunktion des Antriebsstrangs mit $G_{AS}$ bezeichnet.

Generell sind erfindungsgemäß bei Robotern mit Rotationsgelenken zwei Vorgehensweisen vorgesehen.

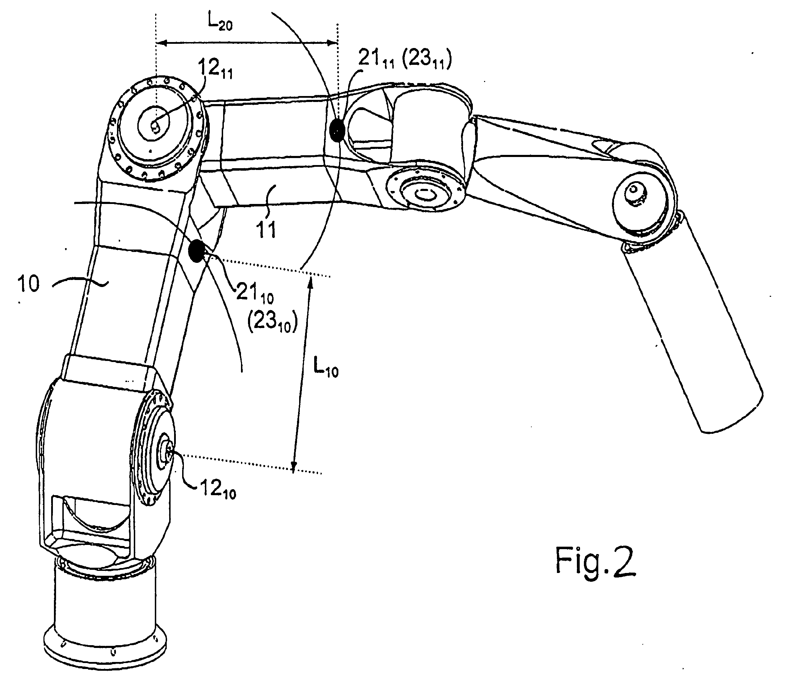

Auf einzelnen oder mehreren rotatorischen Antriebssträngen 10, 11 eines in seiner Gesamtheit mit 1 bezeichneten Roboters sind jeweils eindimensional messende Beschleunigungssensoren $21_{10}$, $21_{11}$ abtriebsseitig, so wie in Fig. 2 schematisch angedeutet, derart angebracht, dass jeder der Beschleunigungssensoren $21_{10}$, $21_{11}$ zum einen außerhalb des Drehzentrums des jeweiligen Antriebsstrangs 10, 11 liegt und zum anderen seine Messrichtung tangential zu der Bahn verläuft, die der Sensor $21_{10}$, $21_{11}$ bei Rotation der zugehörigen Achsen $12_{10}$ bzw. $12_{11}$ beschreiben würde. Die jeweilige Bahn ist in Fig. 2 in Form durch die Beschleunigungssensoren $21_{10}$, $21_{11}$ verlaufender kreisförmiger Bahnen angedeutet.

Für in industrieller Umgebung eingesetzte Roboter sind in jüngster Zeit entwickelte mikromechanische Beschleunigungssensoren aufgrund deren geringen Eigengewichts und deren hohen mechanischen sowie thermischen Belastbarkeit in hervorragender Weise geeignet. Von der Firma Analog Devices Inc. werden solche leistungsfähigen mikromechanischen Beschleunigungssensoren mit der Typenbezeichnung ADXL05 und ADXL202 vertrieben.

Bei Beachtung der vorstehend angeführten Anbringungsvorgaben ist eine ausschließliche Messung von Bahnbeschleunigungen sichergestellt. Die Rotationsbeschleunigung ω einer Achse kann bei einer solchen Anordnung leicht aus gemessenen Beschleunigungswerten a eines zugehörigen Beschleunigungssensors n und dessen Drehradius L gemäß G1.1 errechnet werden:

$$\dot{\omega}_n = \frac{a_n}{L_n} \qquad\qquad (1)$$

Die Drehradien der Beschleunigungssensoren $21_{10}$, $21_{11}$ sind in Fig. 2 mit $L_{10}$, $L_{20}$ bezeichnet.

Ferner können auch durch Einsatz von mehrdimensional messenden Beschleunigungssensoren $23_{10}$, $23_{11}$ Beschleunigungen, die nicht in der eigentlichen Drehrichtung liegen, wie beispielsweise Quer- oder Kippbeschleunigungen, berücksichtigt werden.

Durch solche Beschleunigungsmessungen werden Aussagen über das abtriebseitige Verhalten der jeweiligen

Antriebsstränge, beispielsweise der Antriebsstränge 10, 11 in Fig. 2 erhalten, so dass mit geeigneten Maßnahmen unerwünschten Effekten, wie beispielsweise Nachschwingen oder Schleppfehlern, gezielt entgegengewirkt werden kann.

Dazu ist ein Vergleich zwischen Soll-Beschleunigung, die bei Robotern im Allgemeinen als Ergebnis der Bahnplanung bekannt ist, und einer Ist-Beschleunigung notwendig, die gemessen wird. Auf Basis dieses Vergleiches können durch einen entsprechenden Regelalgorithmus die vorstehend angeführten Effekte verringert oder sogar verhindert werden.

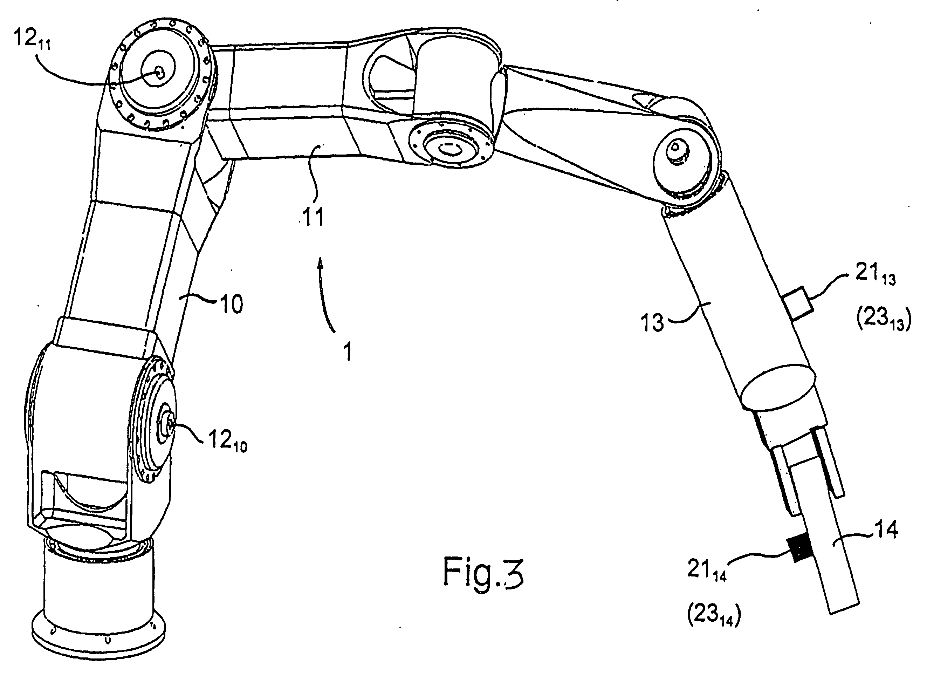

Wie der schematischen Darstellung in Fig. 3 zu entnehmen ist, sind mehrdimensional messende Beschleunigungssensoren $23_{13}$, $23_{14}$ oder mehrere eindimensional messende Beschleunigungssensoren $21_{13}$, $21_{14}$ an einer Werkzeugaufnahme 13, d.h. an einem Flansch des Roboters 1 bzw. an einem Werkzeug 14, angebracht, das der Roboter 1 führt. Die Anbringung der mehrdimensional messenden Beschleunigungssensoren $23_{13}$, $23_{14}$ oder der mehreren eindimensional messenden Beschleunigungssensoren $21_{13}$, $21_{14}$ erfolgt dabei derart, dass alle Beschleunigungen gemessen werden können, deren Bestimmung angestrebt wird.

Auf diese Weise wird eine Aussage über das abtriebseitige Verhalten einer kinematischen Verkettung einzelner Achsen erhalten, und zwar je nach Anbringung der Beschleunigungssensoren bis hin zum Flansch oder zur Werkzeugspitze. Das heißt, je nach Anbringungsort der Beschleunigungssensoren kann die Dynamik der einzelnen Achsen $12_{10}$, $12_{11}$ des Roboters 1 oder die Dynamik eines Gesamtsystems, das aus Roboter 1 und Werkzeug 14 besteht, erfasst werden.

Bei einer solchen Anbringung der Beschleunigungssensoren lassen sich die gemessenen Beschleunigungen a nicht mehr direkt den einzelnen Achsen $12_{10}$, $12_{11}$ des Roboters 1 zuordnen, sondern die zuordnung erfolgt über ein zeitvariantes lineares Abbildungsgesetz, der sogenannten inversen Kinematik. Die sogenannte Jakobi-Matrix $\underline{J}$ beschreibt die Abbildung der Winkelgeschwindigkeiten $\omega$ der einzelnen Achsen auf die Bahngeschwindigkeit am Anbringungsort der Beschleunigungssensoren und kann aus der Robotergeometrie hergeleitet werden (siehe John J. Craig "Introduction to Robotics-Mechanics and Control"; Addison-Wesley Publishing Company, Second Edition 1955).

Durch einmaliges Differenzieren dieses Abbildungsgesetzes wird die Abbildung von kartesisch gemessenen Beschleunigungen auf die Gelenkwinkelbeschleunigungen gemäß G1.(2) erhalten:

$$\underline{v} = \underline{J} \cdot \underline{\omega} \Rightarrow \dot{\underline{v}} = \underline{a} = \dot{\underline{J}} \cdot \underline{\omega} + \underline{J} \cdot \dot{\underline{\omega}} \qquad (2)$$

Daraus folgt:

$$\dot{\underline{\omega}} = \underline{J}^{-1} \cdot \underline{a} - \underline{J}^{-1} \cdot \dot{\underline{J}} \cdot \underline{\omega} \qquad (3)$$

Über die inverse Kinematik wird also ebenso wie im Falle der achsweisen Beschleunigungsmessung eine Aussage über das abtriebsseitige Verhalten der einzelnen Achsen erhalten.

Im Folgenden wird dargelegt, wie unter Berücksichtigung der vorstehenden Ausführungen das dynamische verhalten eines Roboters verbessert werden kann.

Unabhängig von der Anbringung der Beschleunigungssensoren $21_{10}$, $21_{11}$, $21_{13}$ bzw. $23_{10}$, $23_{11}$, $23_{13}$ können die abtriebseitig gemessenen Beschleunigungen dazu verwendet werden, eine Verbesserung der Regelgüte und damit der Bahn- und Positioniergenauigkeit zu erreichen, so beispielsweise durch das aktive Dämpfen von Einschwingvorgängen. Dabei kann auch ohne weiteres eine Integration der Beschleunigungssignale in bestehende Lageregelkreise, wie sie heutzutage üblicherweise zur Regelung elektrischer Antriebe eingesetzt werden, mit wenig Aufwand vorgenommen werden.

Im Bereich der elektrischen Antriebstechnik wird ein sogenannter Lageregelkreis in großem Umfang eingesetzt, da er die industriellen Anforderungen an Einfachheit und Robustheit gegenüber Parameteränderungen und Dynamik weitestgehend erfüllt. Daher wird nachstehend von einem solchen Lageregelkreis ausgegangen.

Ein solcher Lageregelkreis besteht aus einer Kaskadierung mehrerer SISO-(Single-In, Single-Out) Regelkreise. Im Normalfall sind, wie in Fig. 4 dargestellt, ein Positionsregelkreis 30, ein Geschwindigkeitsregelkreis 31 und ein Stromregelkreis 32 kaskadiert. In Fig. 4 ist mit 33 ein Antriebsstrang bezeichnet, welcher einen Motor, das Getriebe und eine Last einschließt. Über am Antriebsstrang abtriebsseitig angebrachte Sensoren werden Messdaten erhalten, die in einer Messdaten verarbeitenden Einheit 34 so weiter verarbeitet werden, dass die Ausgangsdaten der Einheit 34 in den drei Regelkreisen 30 bis 32 vorgeschalteten Subtrahiergliedern 35 bis 37 von den für die einzelnen Regler vorgesehenen Eingangswerten subtrahiert werden.

Gemäß der Erfindung ist es entscheidend, daß es mit abtriebsseitig angebrachten Beschleunigungssensoren

möglich ist, eine aktive Dämpfung der Eigendynamik $G_{AS}$ eines Antriebsstrangs zu realisieren. Hierbei läßt sich die Eigendynamik des Antriebsstrangs im Laplacebereich durch die Übertragungsfunktion $G_{AS}$ darstellen, durch welche der Zusammenhang zwischen den Laplace-Transformierten der an- und abtriebseitigen Ist-Winkelgeschwindigkeiten $\omega_{ist,an}$ bzw. $\omega_{ist,ab}$ hergestellt wird, so daß gilt

$$\omega_{ist,ab} = G_{AS} \cdot \omega_{ist,an}.$$

Hierbei beschreibt die übertragungsfunktion $G_{AS}$ sowohl den zeitinvarianten (Übersetzung des Getriebes) als auch den zeitvarianten Effekt (die Schwingungsfähigkeit). Hierbei wird bei der Beurteilung der zeitvarianten Effekte Stabilität vorausgesetzt, d.h. nach einer Anregung kommt das System nach einer Einschwingzeit $T_{einschwing}$ wieder zur Ruhe.

Der Antriebsstrang AS eines Roboters wird durch eine Übertragungsfunktion $G_{AS}(s)$ beschrieben, die im allgemeinen auch die Schwingungsfähigkeit ($PT_2$-Verhalten) aufweist (siehe Fig.4). Für die Antriebsseite gilt gemäß G1. (4):

$$\omega_{ist,an} = G_{GR} \cdot \omega_{soll,an} \qquad (4)$$

wobei mit $\omega_{ist,\,an}$ die antriebsseitige Ist-Winkelgeschwindigkeit, mit $\omega_{soll,\,an}$ die antriebsseitige Soll-Winkelgeschwindigkeit und mit $G_{GR}$ die Übertragungsfunktion eines geschlossenen Geschwindigkeitsregelkreises bezeichnet sind. Des weiteren ist der Zusammenhang zwischen antriebsseitiger Soll- und Istgeschwindigkeit durch die Übertragungsfunktion $G_{GR}$ hergestellt.

Der zwischen An- und Abtriebsseite liegende Antriebsstrang AS wird beschrieben durch G1. (5):

$$\omega_{ist,ab} = G_{AS} \cdot \omega_{ist,an} \qquad (5)$$

wobei mit $\omega_{ist,ab}$ die abtriebseitige Ist-Winkelgeschwindigkeit und mit $G_{AS}$ die Übertragungsfunktion des Antriebsstranges AS bezeichnet ist.

Aus den G1.' en (4) und (5) ergibt sich G1. (6):

$$\omega_{ist,ab} = G_{AS} \cdot G_{GR} \cdot \omega_{soll,an} \qquad (6)$$

Durch Differentiation wird für die Beschleunigung $\omega_{ist,ab}$ gemäß Gl.(7) erhalten:

$$\dot{\omega}_{ist,ab} = G_{AS} \cdot G_{GR} \cdot \dot{\omega}_{soll,an} \qquad (7)$$

Eine numerische Differenzierung eines Geschwindigkeitssignals $\omega_{soll,an}$ ist im allgemeinen unproblematisch, da das Geschwindigkeitssignal $\omega_{soll,an}$ von der Bahnplanung des Roboters generiert wird und damit frei von Störungen ist.

Wird nun die Differenz $\Delta\dot{\omega}$ aus der antriebsseitigen Sollbeschleunigung $\dot{\omega}_{soll,an}$ und der abtriebseitigen Istbeschleunigung $\dot{\omega}_{ist,ab}$ gebildet, d.h. $\Delta\dot{\omega} = \dot{\omega}_{soll,an} - \dot{\omega}_{ist,ab}$ so ergibt sich gemäß Gl. (8) :

$$\Delta\dot{\omega} = (1 - G_{AS}G_{GR}) \cdot \dot{\omega}_{soll,an} \qquad (8)$$

Für den statischen Fall gilt $G_{GR} = 1$ und $G_{AS} = 1$, da beide Übertragungsfunktionen eine ausreichend hohe Dämpfung und einen Verstärkungsfaktor von 1 aufweisen müssen; d.h. die Differenz $\Delta\dot{\omega}$ nimmt nur bei ausreichend starker Anregung der unbekannten Eigendynamik $G_{AS}$ durch große Beschleunigungen überhaupt Einfluß auf die Regelung.

Damit steht ein Signal zur Verfügung, das in Abhängigkeit von der Eigendynamik des Antriebsstrangs und des Beschleunigungsprofils benutzt werden kann, um ein abtriebseitiges Beschleunigungsprofil aufzuprägen. Dazu kann das Differenzsignal $\Delta\dot{\omega}$ nach einer entsprechenden Signalvorverarbeitung beispielsweise als Vorsteuersignal auf den Eingang des Geschwindigkeitsregelkreises geschaltet werden (siehe Fig.3). Auch eine Aufschaltung auf den Stromregelkreis ist denkbar. Der überlagerte Positionsregelkreis sorgt für die schnelle Ausregelung auftretender Positionierfehler.

Jedoch können die Beschleunigungssensoren bei achsweiser Anbringung auch dazu benutzt werden, die Drehgeschwindigkeit zu messen. Ein Beschleunigungssensor wird dabei so angebracht, daß die Meßrichtung senkrecht auf derjenigen Bahn steht, die der Sensor bei Drehung der zugehörigen Achse beschreibt (siehe Fig.1).

Dadurch ist es ermöglicht, aus der gemessenen Radialbeschleunigung und dem Abstand des Sensors von der Drehachse die abtriebseitige Winkelgeschwindigkeit $\omega_{ist,\,ab}$ gemäß G1.9 zu messen:

$$\omega_{ist,ab} = \sqrt{\frac{a_r}{L}} \qquad\qquad (9)$$

wobei mit a ein Beschleunigungswert und mit L der Drehradius bezeichnet (siehe Fig.1) wird. Somit kann auch die abtriebseitige Geschwindigkeit in Regelkonzepten genutzt werden.

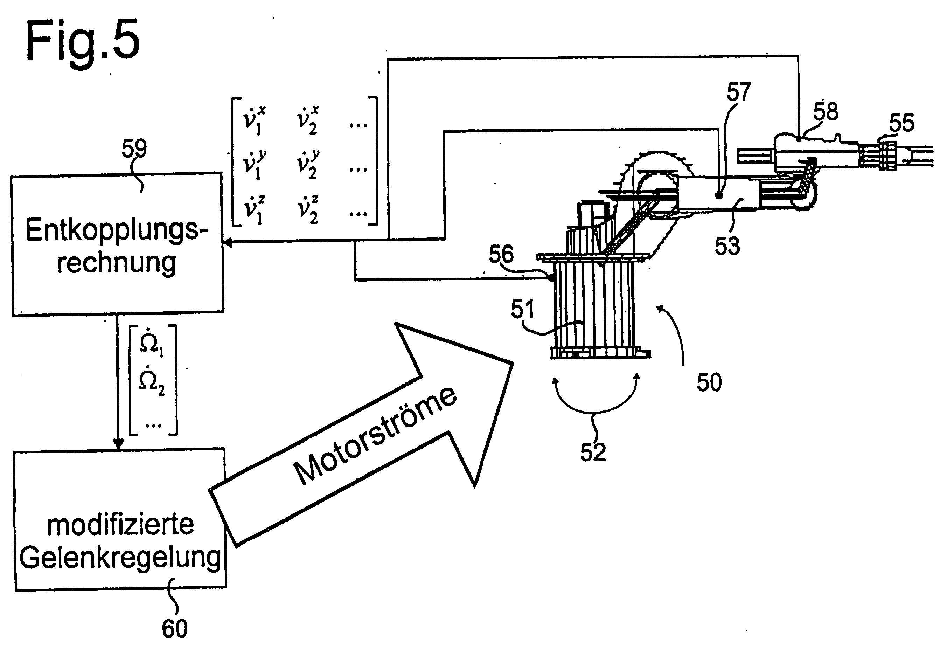

Da die standardmäßig an einem Industrieroboter verwendeten Positionssensoren nicht zum Aufbau einer Gelenkregelung geeignet sind, wie eingangs bereits ausgeführt ist, sind gemäß der Erfindung abtriebseitig Beschleunigungssensoren am Roboter verteilt so anzubringen, daß diejenigen Effekte, gegen welche vorgegangen werden soll, möglichst gut gemessen werden können. Mit Hilfe der Beschleunigungsmeßwerte kann ein prinzipieller Nachteil herkömmlicher Robotersysteme kompensiert werden, nämlich die mangelnde Steifigkeit eines Roboterarms und die daraus resultierende Schwingungsneigung. Hierzu werden gemäß der Erfindung die gemessenen Beschleunigungen in diejenigen Beschleunigungen umgerechnet, welche der zugehörigen Roboterachse und einer die Eigendynamik der Roboterachsen dämpfenden Gelenkregelung entstammen, wie der schematischen Darstellung in Fig. 5 zu entnehmen ist.

In Fig.5 ist in einer Prinzipskizze eine Ausführung des erfindungsgemäßen Verfahrens zum Ansteuern eines in seiner Gesamtheit mit 50 bezeichneten Roboters dargestellt. Der Zentralteil 51 des Roboters 50 ist um seine Achse drehbar, was durch einen darunter eingetragenen Pfeil 52 angedeutet ist. Ferner weist der Roboter 50 in Fig.5 zwei Antriebsstränge 53 und 54 auf, denen jeweils nicht näher bezeichnete Motore zugeordnet sind, mittels welchen die beiden Antriebsstränge 53 und 54 beispielsweise in der Zeichenebene schwenkbar sind. Am vorderen Ende des zweiten Antriebsstrangs 54 ist eine in drei Richtungen schwenkbare Werkzeugaufnahme 55 angedeutet.

Sowohl am Zentralteil 51 des Roboters 50 als auch an dessen beiden Antriebssträngen 52 und 53 sind durch Punkte angedeutete Beschleunigungssensoren 56 bis 58 angebracht, welche über nicht näher bezeichnete Leitungen mit einer Einheit 59 zum Durchführen von Entkopplungsrechnungen verbunden sind. Der Einheit 59 ist eine modifizierte Gelenkregelung 60 nachgeordnet, von welcher die nicht näher bezeichneten Motore in dem Zentralteil 51 und den beiden Antriebssträngen 53 und 54 mit den entsprechenden Motorströmen versorgt werden, wie durch einen weißflächigen Pfeil angedeutet ist.

Hiermit sind mit $\dot{v}_n^{x,y,z}$ in einem Inertialsystem am Anbringungsort eines n-ten (mit n = 1,2,3...n) Beschleunigungssensors gemessene Beschleunigungen in x,y,z-Richtung bezeichnet, während mit $\dot{\Omega}_1$, $\dot{\Omega}_2$ usw. die Winkelbeschleunigungen der einzelnen Achsen bezeichnet sind.

Mittels einer der anhand von Fig.3 beschriebenen Regelung entsprechenden Regelung ist mit Hilfe der mittels der Beschleunigungssensoren, beispielsweise 56 bis 58 ermittelten Beschleunigungsmeßwerten eine Ansteuerung der einzelnen Motore des Roboters 50 so vorzunehmen, daß diejenigen Effekte, die der Eigendynamik der jeweiligen Achse zuzuschreiben sind, kompensiert werden.

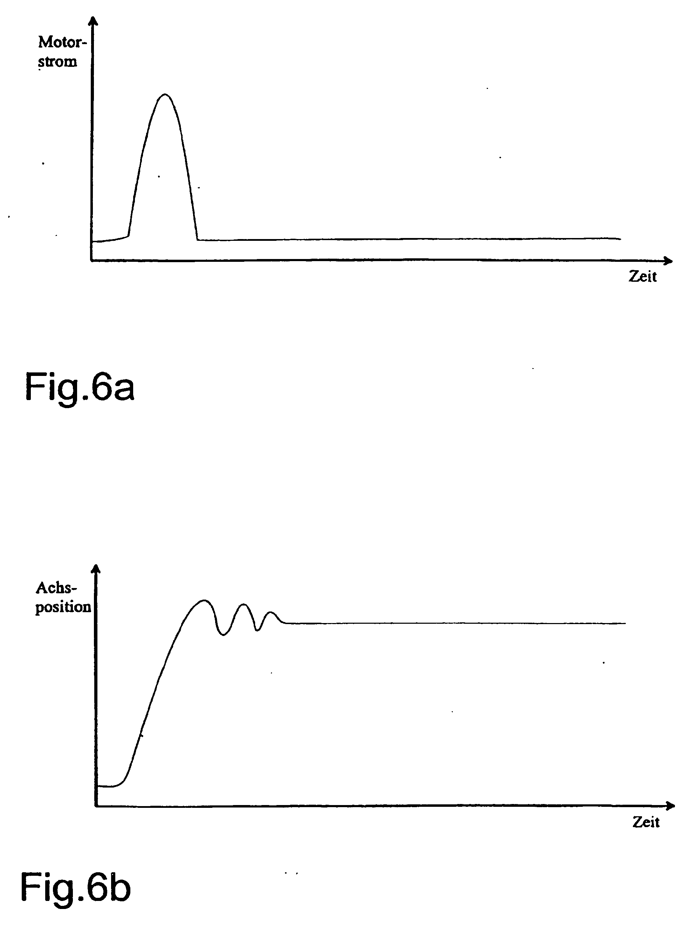

Fig.6a und 6b zeigen den prinzipellen Verlauf des Motorstroms bzw. der abtriebseitigen Position mit einer Gelenkregelung nach dem Stand der Technik. Hierbei sind in Fig.6a und 6b auf der Abszisse die Zeit und auf der Ordinate der Motorstrom bzw. die Achsposition aufgetragen. Aufgrund der vorhandenen Nachgiebigkeit in den Antriebssträngen eines herkömmlichen Roboters kommt es auf der Abtriebsseite, d.h. an demjenigen Teil des Roboters, der von dem Motor angetrieben wird, zu unerwünschten Positionsabweichungen in Form von Schwingungen. Diese Schwingungen können von einem Roboter mit ausschließlich antriebsseitig messenden Positionssensoren nicht detektiert und dementsprechend auch nicht kompensiert werden.

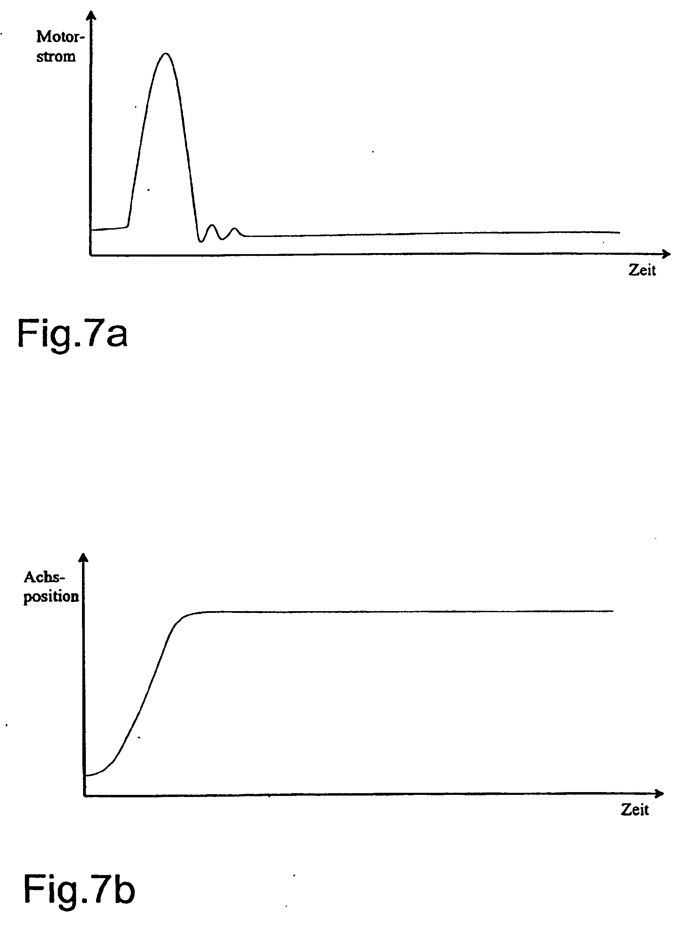

Mit abtriebseitig angebrachten Beschleunigungssensoren, wie beispielsweise den Sensoren 56 bis 58 (Fig.5) ist es jedoch möglich, diese Schwingungen zu messen und den einzelnen Achsen zuzuordnen. Eine angepaßte Gelenkregelung kann dann auf diese Schwingungen reagieren, um eine möglichst gute Dämpfung zu erreichen. Dazu ist es notwendig, daß der Gelenkregelungsalgorithmus einen Soll-Motorstrom und damit ein Motormoment erzeugt, das den antriebsseitigen Schwingungen entgegenwirkt. Um dies zu verdeutlichen, sind in Fig.7a und 7b analog den Kurven in Fig.6a und 6b der Motorstrom bzw. die Achsposition über der Zeit aufgetragen. Im Idealfall treten bei dem erfindungsgemäßen Verfahren nur noch am Motor, beispielsweise bei einem Drehrichtungswechsel Schwingungen auf, jedoch nicht mehr an der Robotermechanik.

Nachstehend sind Bewegungsgleichungen für starre Körper angegeben, welche als Grundlage einer Berechnung der Winkelbeschleunigungen $\dot{\Omega}_n$ aus den gemessenen Beschleunigungen $\dot{v}_n{}^{x,y,z}$ in x,y,z-Richtung dienen. Hierbei sind die Bewegungsgrößen, nämlich Position, Geschwindigkeit und Beschleunigung als Vektoren in einem dreidimensionalen kartesischen Koordinatensystem wiedergegeben. Im folgenden sind die Bewegungsgrößen nur noch vektoriell angegeben, so daß zur Erhöhung der Übersichtlichkeit der Vektorpfeil weggelassen ist.

Ein Bezugskoordinatensystem $\Sigma$ für die vektoriellen Bewegungsgrößen ist links hochgestellt am Vektor notiert. Rechts tiefgestellt sind die mit der Bezeichnung des beobachteten Punktes, nämlich ein Ortsvektor oder der Ursprung eines weiteren Systems, gekennzeichnet. Zum Beispiel ist mit dem Geschwindigkeitsvektor $^AV_B$ die Geschwindigkeit eines Punktes B im System $\Sigma_A$ gemeint. Ist B ein System, so ist die Geschwindigkeit des Ursprungs von System $\Sigma_B$ im System $\Sigma_A$ gemeint. Der Vektor $^A\Omega_B$ kennzeichnet die Winkelgeschwindigkeit des Systems $\Sigma_B$ bezüglich des Systems $\Sigma_A$.

Das Inertialsystem hat die Bezeichnung $\Sigma_0$. Wird ein Vektor bezüglich des Intertialsystems notiert, so kann die links hochgestellte 0 am Vektor entfallen. Beispielsweise kann statt $^0Q_A$ auch nur $Q_A$ geschrieben werden.

Eine Bewegung ist als eine Lageänderung eines Raumpunktes in einem Bezugssystem definiert. Um eine Bewegung anzugeben, wird also ein Bezugssystem benötigt. Eine Bewegung im Raum setzt sich aus Betrag und Richtung zusammen, die als Vektor in den Koordinaten des Bezugssystems angegeben wird. Das Bezugssystem $\Sigma_A$ ist dabei das ruhende Intertialsystem. Das Bezugssystem $\Sigma_B$ ist ein Führungssystem und kann sich bezüglich des Bezugssystems $\Sigma_A$ bewegen. Der Punkt Q und der Ursprung von System $\Sigma_C$ sind die betrachteten Orte.

Die Differentation eines Ortsvektors $^BQ$ im System $\Sigma_B$ ergibt die Geschwindigkeit $^BV_Q$ gemäß Gl. (10).

$$^BV_Q = \frac{d}{dt}\,^BQ = \lim_{\Delta t \to 0} \frac{^BQ(t+\Delta t) - {}^BQ(t)}{\Delta t} \qquad (10)$$

Mit einem Winkelgeschwindigkeitsvektor $^A\Omega_B$ ist die Drehgeschwindigkeit des Systems $\Sigma_B$ bezüglich des Bezugssystems $\Sigma_A$ angegeben. Der Betrag des Vektors entspricht der Winkelgeschwindigkeit und die Richtung des Vektors gibt die Drehachse an. Bei der Angabe der relativen Winkelgeschwindigkeit zwischen-zwei Systems spielt es keine Rolle, ob die Ursprünge der Systems zusammenliegen oder durch einen Ortsvektor versetzt zueinander sind.

Ein System $\Sigma_C$ soll gegenüber dem System $\Sigma_B$ mit der Winkelgeschwindigkeit $^B\Omega_C$ rotieren, was im System $\Sigma_B$ ausgedrückt ist. Zusätzlich rotiert das System $\Sigma_B$ gegenüber dem Inertialsystem $\Sigma_A$ mit der Winkelgeschwindigkeit $^A\Omega_B$, was im System $\Sigma_A$ ausgedrückt wird. Die resultierende Winkelgeschwindigkeit $^A\Omega_C$ zwischen den Systemen $\Sigma_A$ und $\Sigma_C$ ergibt sich durch Transformationen in ein gemeinsames Koordinatensystem und anschließender Addition aus G1. (12).

$$^A\Omega_C = {}^A\Omega_B + {}^AR_B\,{}^B\Omega_C \qquad (12)$$

Bewegt sich ein Punkt $^BQ$ geradlinig bezüglich eines ruhenden Systems $\Sigma_B$, so kann die Geschwindigkeit $^BV_Q$ des Punktes bezüglich eines weiteren ruhenden Systems $\Sigma A$ gemäß G1. (13) ausgedrückt werden als

$$^AV_Q = {}^AR_B\,{}^BV_Q \qquad (13)$$

Falls sich das System $\Sigma_B$ jedoch zusätzlich geradlinig bezüglich des Systems $\Sigma_A$ bewegt, addieren sich die beiden Geschwindigkeitsvektoren von Qunkt Q und System $\Sigma_B$ zu einer resultierenden Geschwindigkeit gemäß Gl. (14)

$$^AV_Q = {}^AV_B + {}^AR_B\,{}^BV_Q \qquad (14)$$

Werden zwei Systems $\Sigma_A$ und $\Sigma_B$ betrachtet, deren Ursprünge nicht in demselben Punkt liegen, und sich lediglich rotatorisch bewegen, so haben die beiden Ursprünge einen konstanten Abstand. Das System $\Sigma_B$ rotiert im Ursprung gegenüber dem System $\Sigma_A$ um eine feste Achse mit der Winkelgeschwindigkeit $^A\Omega_B$. Im System $\Sigma_A$ wird der Punkt $^BQ$ in Abhängigkeit von der Zeit betrachtet. Der Punkt bewegt sich nicht bezüglich des Systems $\Sigma_B$ somit gilt $^BV_Q$ = 0. Bezüglich des Systems $\Sigma_A$ beschreibt der Punkt eine Kreisbahn mit dem Betrag des Ortsvektors $^BQ$ als Radius. Folglich gilt für die Geschwindigkeit $^AV_Q$ des Punktes $^BQ$ gemäß G1.(15):

$$^AV_Q \;=\; ^A\Omega_B \; x \; ^AQ \;=\; ^A\Omega_B \; x \; ^AR_B\,^BQ \qquad\qquad (15)$$

Bewegt sich nun der Punkt $^BQ$ bezüglich des Systems $\Sigma_B$, so addiert sich die Geschwindigkeitskomponente $^BV_Q$ gemäß Gl.(16)

$$^AV_Q \;=\; ^AR_B\,^BV_Q \;+\; ^A\Omega_B \; x \; ^AR_B\,^BQ \qquad\qquad (16)$$

Ist der Abstand zwischen den Systemen $\Sigma_A$ und $\Sigma_B$ nicht mehr zeitinvariant, sondern bewegen sie sich zueinander mit der Geschwindigkeit $^AV_B$, so ergibt sich für die Geschwindigkeit $^AV_Q$ eines Punktes in einem rotatorisch und translatorisch bewegten Führungssystem gemäß Gl. (17):

$$^AV_Q \;=\; ^AV_B \;+\; ^AR_B\,^BV_Q \;+\; ^A\Omega_B \; x \; ^AR_B\,^BQ \qquad\qquad (17)$$

Wird Gl. (16) differenziert, so wird eine Beschleunigung $^A\dot{V}_Q$ gemäß Gl.(18) erhalten als:

$$^A\dot{V}_Q = \frac{d}{dt}(^AR_B\,^BV_Q) + {}^A\dot{\Omega}_B \times {}^A R_B\,^BQ + {}^A\Omega_B \times \frac{d}{dt}(^AR_B\,^BQ) \qquad (18)$$

Um obige Gleichung explizit darzustellen, werden die beiden differenzierten Terme ausgerechnet. Zunächst wird der zweite Term behandelt. Die Geschwindigkeit aus G1.(16) kann auch als Ableitung des Positionsvektors $^BQ$ gemäß G1.(19) dargestellt werden:

$$\frac{d}{dt}(^AR_B\,^BQ) \;=\; ^AV_Q \;=\; ^AR_B\,^BV_Q \;+\; ^A\Omega_R \; x \; ^AR_B\,^BQ \qquad\qquad (19)$$

Um den ersten Term auszurechnen, wird eine Ableitungsregel für die Rotationsmatrix benötigt.

Ein Punkt, welcher durch den Ortsvektor $p$ dargestellt ist, rotiert um eine feste Achse, welche durch den Vektor $\omega$ festgelegt ist. Die Bahn des Punktes kann mit Hilfe einer Rotationsmatrix $R$ beschrieben werden: $p' = R(t)\,p$. Die Geschwindigkeit des Punktes $p$ ergibt sich durch die Ableitung nach der Zeit gemäß G1.(20):

$$\frac{d}{dt}(Rp) = \omega \times (Rp) \qquad\qquad (20)$$

Dabei liegt der Vektor $\omega$ in der Drehachse, die durch die zeitvariante Rotationsmatrix vorgegeben ist, und der Betrag von ω ist die Winkelgeschwindigkeit der Rotation. Ändert sich zusätzlich der Ortsvektor *p* mit der Zeit, so ergibt sich durch Anwendung der Produktregel gemäß Gl. (21) :

$$\frac{d}{dt}(Rp) = \omega \times (Rp) + R\dot{p} \qquad (21)$$

G1. (21) gilt nicht nur für die Ortsvektoren p, sondern auch für die Geschwindigkeitsvektoren. Somit gilt auch für die translatorische Geschwindigkeit v gemäß Gl.(22):

$$\frac{d}{dt}(Rv) = \omega \times (Rv) + R\dot{v} \qquad (22)$$

Unter Anwendung der Gleichung (22) ergibt sich der erste Term aus G1. (18) gemäß G1. (23):

$$\frac{d}{dt}({}^{A}R_{B}{}^{B}V_{Q}) = {}^{A}\Omega_{B} \times {}^{A}R_{B}{}^{B}V_{Q} + {}^{A}R_{B}{}^{B}\dot{V}_{Q} \qquad (23)$$

Durch Einsetzen der Ergebnisse von Gl. 'en (19) und (23) in Gl.(18) wird zusammengefaßt Gl.(24) erhalten:

$${}^{A}\dot{V}_{Q} = {}^{A}R_{B}{}^{B}\dot{V}_{Q} + 2{}^{A}\Omega_{B} \times {}^{A}R_{B}{}^{B}V_{Q} + {}^{A}\dot{\Omega}_{B} \times {}^{A}R_{B}{}^{B}Q + {}^{A}\Omega_{B} \times ({}^{A}\Omega_{B} \times {}^{A}R_{B}{}^{B}Q) \qquad (24)$$

Die allgemeine Formel für die Geschwindigkeit aus G1.(17) unterscheidet sich von der im obigen Abschnitt ausgegangenen Gl.(16) nur im Term ${}^{A}V_{B}$. Wird nun diese Gleichung differenziert, wird für die Beschleunigung eines Punktes in einem rotatorisch und translatorisch beschleunigten Bezugssystem gemäß G1.(25) erhalten:

$${}^{A}\dot{V}_{Q} = {}^{A}\dot{V}_{B} + {}^{A}R_{B}{}^{B}\dot{V}_{Q} + 2{}^{A}\Omega_{B} \times {}^{A}R_{B}{}^{B}V_{Q} + {}^{A}\dot{\Omega}_{B} \times {}^{A}R_{B}{}^{B}Q + {}^{A}\Omega_{B} \times ({}^{A}\Omega_{B} \times {}^{A}R_{B}{}^{B}Q) \qquad (25)$$

Wird die gewonnene Kenntnis auf das Bewegungsschema eines Roboters übertragen, so bietet sich an, das Inertialsystem $\Sigma_{A}$ in den ruhenden Roboterfluß zu plazieren. Das System $\Sigma_{B}$ wird in das Gelenk gelegt, und der Punkt ${}^{B}Q$ liegt auf dem Arm des Gelenks. Da sich die Armlänge eines Knickarmroboters nicht ändert, wird in diesem Fall ein zeitinvarianter Vektor erhalten. (Bei einem Lineargelenk wäre dagegen der Punkt $B_{Q}$ zeitabhängig). Daraus ergibt sich eine Vereinfachung der Beschleunigungsformel gemäß G1.(26) in dem ${}^{B}V_{Q}$ und ${}^{B}V_{Q}$ zu Null gesetzt wird:

$${}^{A}\dot{V}_{Q} = {}^{A}\dot{V}_{B} + {}^{A}\dot{\Omega}_{B} \times {}^{A}R_{B}{}^{B}Q + {}^{A}\Omega_{B} \times ({}^{A}\Omega_{B} \times {}^{A}R_{B}{}^{B}Q) \qquad (26)$$

Diese Gleichung ist unter anderem Grundlage für die weitere Betrachtung der Beschleunigungsrückführung am Roboter.

**Patentansprüche**

1. Verfahren zum Steuern eines Roboters, wobei Beschleunigungswerte mittels an geeigneten Anbringungsorten mindestens eines Antriebsstranges und/oder der Werkzeugaufnahme des Roboters abtriebsseitig angebrachten Beschleunigungssensoren gemessen und in einzelnen Robotergelenken zuzuordnende Beschleunigungswerte umgerechnet werden, **dadurch gekennzeichnet, dass** die gemessenen Beschleunigungswerte in Winkelbeschleunigungen umgerechnet werden und die bestimmten Winkelbeschleunigungen als Ist-Beschleunigungswerte bzw. von diesen abgeleitete Ist-Winkelgeschwindigkeiten mit entsprechenden Soll-Werten verglichen und das erhaltene Differenzsignal als Vorsteuersignal eines Reglerkreises zumindest eines Motors aufgeschaltet wird.

2. Verfahren nach Anspruch 1, **dadurch gekennzeichnet, dass** mittels eines oder mehrerer Beschleunigungssensoren, die abtriebseitig in einem oder mehreren rotatorisch angetriebenen Gliedern des mehrgliedrigen Antriebsstrangs des Roboters angebracht sind, Beschleunigungswerte gemessen werden, die anschließend in einem gegebenenfalls modifizierten Lageregelkreis verarbeitet werden.

3. Verfahren nach Anspruch 1 oder 2, **dadurch gekennzeichnet, dass** mittels mindestens eines oder mehreren Beschleunigungssensoren, die an einem bzw. mehreren rotatorisch angetriebenen Gliedern des mehrgliedrigen Antriebsstrangs des Roboters abtriebsseitig so angebracht sind, dass die Messrichtung senkrecht auf derjenigen Bahn steht, welche von dem Sensor bei Drehung der dem Beschleunigungssensor zugehörigen Achse durchlaufen wird, die jeweilige Radialbeschleunigung $a_r$ gemessen wird und daraus eine abtriebseitige Winkelgeschwindigkeit $\omega_{ist,ab}$ gemäß

$$\omega_{ist,ab} = \sqrt{\frac{a_r}{L}}$$

bestimmt wird, wobei mit L der Drehradius bezeichnet ist, welcher dem Abstand des jeweiligen Beschleunigungssensors von der entsprechenden Drehachse entspricht, und dass die erhaltene abtriebseitige Geschwindigkeit in einem Regelkonzept weiterverarbeitet wird.

4. Einrichtung zum Steuern eines Roboters mit mindestens einem an einem geeigneten Anbringungsort mindestens eines Antriebsstranges (10, 11; 12, 13) und/oder der Werkzeugaufnahme (13) abtriebsseitig angebrachten Beschleunigungssensors ($21_{10}$, $21_{11}$, $23_{10}$, $23_{11}$, 44 bis 46) zum Bestimmen von Beschleunigungswerten und mit einer Einheit (57) zum Umrechnen der Beschleunigungswerte in einzelnen Robotergelenken zuzuordnende Beschleunigungswerte (34,59), **gekennzeichnet durch** einen Regelkreis (32, 60) mindestens eines Motors mit einer Einrichtung (34, 59) zum Umrechnen von **durch** mindestens einen Beschleunigungssensor ($21_{10}$, $21_{11}$, $23_{10}$, $23_{11}$, 44 bis 46) gemessener Beschleunigungswerte in Winkelbeschleunigen und mit einer Einrichtung (31, 60) zum Vergleich der bestimmten winkelbeschleunigungen bzw. von diesem abgeleiteter Ist-Winkelgeschwindigkeiten mit entsprechenden Soll-Werten und zur Aufschaltung des sich ergebenden Differenzsignals als Vorsteuersignal des Regelkreises (32, 60).

5. Einrichtung nach Anspruch 4, **dadurch gekennzeichnet, dass** an einem in die Werkzeugaufnahme (13) eingesetzten Werkzeug (14) abtriebseitig mindestens ein Beschleunigungssensor ($21_{14}$, $23_{14}$) angebracht ist.

6. Einrichtung nach einem der Ansprüche 4 oder 5, **dadurch gekennzeichnet, dass** der abtriebseitig angebrachte Beschleunigungssensor ein mindestens zweidimensional messender Beschleunigungssensor ($23_{13}$, $23_{14}$) ist.

7. Einrichtung nach einem der Ansprüche 4 bis 6, **dadurch gekennzeichnet, dass** der Beschleunigungssensor ein eindimensional messender Beschleunigungssensor ($23_{13}$, $23_{14}$) ist, welcher außerhalb des Drehzentrums des angetriebenen Stranges so angebracht ist, dass dessen Messrichtung tangential zu einer Bahn verläuft, welche der Sensor bei Rotation des angetriebenen Stranges durchlaufen würde.

**Claims**

1. Method for controlling a robot, in which acceleration values are measured by acceleration sensors fitted on the driven or output side at suitable fitting locations of at least one drive string and/or the tool mounting of the robot and which are converted into acceleration values to be associated with individual robot joints, **characterized in that** the measured acceleration values are converted into angular accelerations and the established angular accelerations are in the form of actual acceleration values or actual angular velocities derived therefrom compared with corresponding nominal values and the differential signal obtained as an input control signal of a control loop is superimposed on at least one motor.

2.  Method according to claim 1, **characterized in that** by means of one or more acceleration sensors fitted on the output side in one or more rotary-driven members of the multimember drive string of the robot, acceleration values are measured and are subsequently processed in an optionally modified position control loop.

3.  Method according to claim 1 or 2, **characterized in that** by means of at least one or more acceleration sensors fitted on the output side to one or more rotary-driven members of the multimember drive string of the robot the measuring direction is perpendicular to the particular path traversed by the sensor on rotating the spindle associated with the acceleration sensor, the radial acceleration ar is measured and determination takes place of the output side angular velocity $\omega$act,ou, so that

$$\omega\text{act,ou} = \sqrt{\frac{\text{ar}}{\text{L}}}$$

in which L is the rotation radius corresponding to the distance between the particular acceleration sensor and the corresponding rotation axis, and the velocity obtained on the output side is further processed in a control concept.

4.  Device for controlling a robot with at least one acceleration sensor $(21_{10}, 21_{11}, 23_{10}, 23_{11}, 44$ to $46)$ fitted on the output side at a suitable fitting location of at least one drive string $(10, 11; 12, 13)$ and/or the tool mounting $(13)$ for determining acceleration values and with a unit $(57)$ for converting the acceleration values into acceleration values $(34, 59)$ to be associated with individual robot joints, **characterized by** a control loop $(32, 60)$ of at least one motor with a device $(34, 59)$ for converting acceleration values measured by at least one acceleration sensor $(21_{10}. 21_{11}, 23_{10}, 23_{11}, 44$ to $46)$ into angular accelerations and with a device $(31, 60)$ for comparing the determined angular accelerations or actual angular velocities derived therefrom with corresponding nominal values and for superimposing the resulting differential signal as an input control signal of the control loop $(32, 60)$.

5.  Device according to claim 4, **characterized in that** to a tool $(14)$ inserted in the tool mounting $(13)$ at least one acceleration sensor $(21_{14}, 23_{14})$ is fitted on the output side.

6.  Device according to one of the claims 4 or 5, **characterized in that** the acceleration sensor fitted on the output side is an at least two-dimensionally measuring acceleration sensor $(23_{13}, 23_{14})$.

7.  Device according to one of the claims 4 to 6, **characterized in that** the acceleration sensor is a unidimensionally measuring acceleration sensor $(23_{13}, 23_{14})$, which is so fitted outside the rotation sensor of the driven string that its measuring direction is tangential to a path which would be traversed by the sensor on rotating the driven string.

## Revendications

1.  Procédé de commande d'un robot, dans lequel on mesure des valeurs d'accélération et on les convertit en valeurs d'accélération à associer à des articulations de robot individuelles au moyen de capteurs d'accélération disposés côté sortie en des zones appropriées d'au moins une ligne de transmission et/ou du réceptacle à outils du robot, **caractérisé en ce que** les valeurs d'accélération mesurées sont converties en accélérations angulaires et que les accélérations angulaires sont comparées en tant que valeurs d'accélération réelles ou que vitesses angulaires réelles dérivées de celles-ci à des valeurs de consigne correspondantes, et **en ce que** le signal de différence obtenu est utilisé comme signal pilote d'un circuit de régulation d'au moins un moteur.

2.  Procédé selon la revendication 1, **caractérisé en ce que** l'on mesure des valeurs d'accélération, qui sont ensuite traitées dans un circuit de régulation de position modifié le cas échéant, au moyen d'un ou de plusieurs capteurs d'accélération, qui sont disposés côté sortie dans un ou plusieurs éléments entraînés par pivotement de la ligne de transmission à plusieurs éléments du robot.

3. Procédé selon la revendication 1 ou 2, **caractérisé en ce qu'**au moyen d'au moins un ou plusieurs capteurs d'accélération, disposés côté sortie sur un ou plusieurs éléments entraînés par pivotement du robot de telle façon que la direction de mesure se trouve située perpendiculairement sur la trajectoire parcourue par le capteur lors du pivotement de l'axe relatif au capteur d'accélération, on mesure l'accélération radiale respective $a_r$ et l'on détermine à partir d'elle une vitesse angulaire de sortie $\omega_{ist,ab}$ telle que

$$\omega_{\mathbf{ist,ab}} = \sqrt{\frac{a_r}{L}}$$

L désignant le rayon de pivotement correspondant à la distance du capteur d'accélération respectif à l'axe de pivotement correspondant, et **en ce que** l'on continue de traiter la vitesse de sortie obtenue dans un système de régulation.

4. Dispositif de commande d'un robot comprenant au moins un capteur d'accélération ($21_{10}$, $21_{11}$, $23_{10}$, $23_{11}$, 44 à 46) disposé côté sortie sur une zone appropriée d'au moins une ligne de transmission (10, 11; 12, 13) et/ou du réceptacle à outils (13) pour déterminer des valeurs d'accélération et comprenant une unité (57) pour convertir les valeurs d'accélération en valeurs d'accélération (34,59) à associer à des articulations individuelles de robot, **caractérisé par** un circuit de régulation (32,60) d'au moins un moteur comprenant un dispositif (34,59) de conversion de valeurs d'accélération mesurées par au moins un capteur d'accélération ($21_{10}$, $21_{11}$, $23_{10}$, $23_{11}$, 44 à 46) en accélérations angulaires et comprenant un dispositif (31, 60) de comparaison des accélérations angulaires définies ou des vitesses angulaires réelles qui en sont dérivées à des valeurs de consigne correspondantes et d'utilisation du signal de différence en résultant comme signal pilote du circuit de régulation (32, 60).

5. Dispositif selon la revendication 4, **caractérisé en ce qu'**au moins un capteur d'accélération ($21_{14}$, $23_{14}$) est disposé côté sortie sur un outil (14) introduit dans le réceptacle à outils (13).

6. Dispositif selon l'une quelconque des revendications 4 ou 5, **caractérisé en ce que** le capteur d'accélération disposé côté sortie est un capteur d'accélération ($23_{13}$, $23_{14}$) mesurant au moins de manière bidimensionnelle.

7. Dispositif selon l'une quelconque des revendications 4 à 6, **caractérisé en ce que** le capteur d'accélération est un capteur d'accélération ($23_{13}$, $23_{14}$) mesurant de manière unidimensionnelle, disposé de telle façon en-dehors du centre de pivotement de la ligne entraînée, que sa direction de mesure s'étend tangentiellement à une trajectoire que parcourrait le capteur lors du pivotement de la ligne entraînée.

Fig.1

$G_{AS}$

EP 0 985 989 B1

Fig.2

EP 0 985 989 B1

Fig.3

Fig.4

EP 0 985 989 B1

# Fig.5

$$\begin{bmatrix} \dot{v}_1^x & \dot{v}_2^x & \dots \\ \dot{v}_1^y & \dot{v}_2^y & \dots \\ \dot{v}_1^z & \dot{v}_2^z & \dots \end{bmatrix}$$

59 Entkopplungs-rechnung

$$\begin{bmatrix} \dot{\Omega}_1 \\ \dot{\Omega}_2 \\ \dots \end{bmatrix}$$

60 modifizierte Gelenkregelung

Motorströme

56  51  52  50  53  57  58  55

EP 0 985 989 B1

Motorstrom

Zeit

# Fig.6a

Achsposition

Zeit

# Fig.6b

Motorstrom

Zeit

# Fig.7a

Achsposition

Zeit

# Fig.7b